# EUROPÄISCHE PATENTANMELDUNG

(11) **EP 4 603 719 A1**
(43) Veröffentlichungstag der Anmeldung: **20.08.2025**
(21) Anmeldenummer: 25151361.0
(22) Anmeldetag: 10.01.2025
(51) Int. Cl.: F16F 9/58, B60G 15/06

(54) **SCHWINGUNGSDÄMPFEREINHEIT**

(30) Priorität: 13.02.2024 DE 102024103970
(71) Anmelder: Vibracoustic SE, 69469 Weinheim (DE)
(72) Erfinder: Altinoluk, Ersan, 20359 Hamburg (DE); Bulling, Dieter, 30900 Wedemark (DE)
(74) Vertreter: Patentanwälte Olbricht Buchhold Keulertz

(57) **Zusammenfassung**

Vorgeschlagen wird eine Schwingungsdämpfereinheit (10), durch die eine Längsachse (L) ragt, umfassend einen Dämpfer (12) mit stirnseitig angeordnetem Anschlagsdeckelelement (14), eine Fußpunktverstelleinrichtung (16), ein Gegenlager (18), welches der Fußpunktverstelleinrichtung (16) entlang der Längsachse (A) gegenüberliegt, eine Feder (20), die sich einends an der Fußpunktverstelleinrichtung (16) und anderenends am Gegenlager (18) abstützt, eine Zusatzfeder (22), der zwischen der Fußpunktverstelleinrichtung (16) und dem Gegenlager (18) angeordnet ist und dem Anschlagsdeckelelement (14) entlang der Längsachse (L) gegenüberliegt, wobei das Anschlagsdeckelelement (14) mit der Fußpunktverstelleinrichtung (16) verbunden, verbindbar, gekoppelt oder koppelbar ist.

## Beschreibung

Die Erfindung betrifft eine Schwingungsdämpfereinheit gemäß Anspruch 1 und Anspruch 7.

Aus der Praxis ist eine Schwingungsdämpfereinheit bekannt, die einen Dämpfer mit stirnseitig fest angeordnetem Anschlagsdeckelelement umfasst. Sie weist fernen eine Fußpunktverstelleinrichtung, ein Gegenlager, welches der Fußpunktverstelleinrichtung entlang der Längsachse gegenüberliegt, eine Feder, die sich einends an der Fußpunktverstelleinrichtung und anderenends am Gegenlager abstützt, und eine Zusatzfeder auf. Die Zusatzfeder ist zwischen der Fußpunktverstelleinrichtung und dem Gegenlager angeordnet und liegt dem Anschlagsdeckelelement entlang der Längsachse gegenüber.

Das Beladen eines Kraftfahrzeugs mit derartiger Schwingungsdämpfereinheit führt dazu, dass deren Feder gestaucht wird und sich das Niveau des Kraftfahrzeugs absenkt. Das ursprüngliche Niveau wird für das beladene Kraftfahrzeug dadurch wieder hergestellt, dass ein Fußpunkt der gestauchten Feder verstellt wird. Dadurch wird jedoch auch ein ursprünglicher Abstand zwischen Zusatzfeder und Anschlagsdeckelelement (Zusatzfederweg) wieder hergestellt, der den maximalen Federweg bestimmt. Dieser Abstand von Zusatzfeder zu Anschlagsdeckelelement ist eigentlich für unbeladene Fahrzeuge vorgesehen. Der beladungsabhängig vorbelasteten Feder wird hingegen ein maximalen Federweg zugeordnet, der für einen vollkommen anderen Beladungszustand vorgesehen ist, beispielsweise für einen unbeladenen Zustand.

In diesem Zustand ist die Feder durch die Beladung jedoch bereits vorbelastet. Kommt nun weitere dynamische Belastung mit den gleichen Federwegen wie vor der Fußpunktverstellung hinzu, beispielsweise während der Fahrt, kann die Feder ausfallen. Es besteht somit eine problematische situative Diskrepanz zwischen einerseits Abstand von Zusatzfeder zu Anschlagsdeckelelement und andererseits der Federvorbelastung.

Aufgabe der Erfindung ist es daher eine Schwingungsdämpfereinheit zu schaffen, welche den Stand der Technik in dieser Hinsicht verbessert.

Hauptmerkmale der Erfindung sind in Anspruch 1 und Anspruch 7 angegeben. Ausgestaltungen sind Gegenstand der Ansprüche 2 bis 6.

Erfindungsgemäß wird eine Schwingungsdämpfereinheit vorgeschlagen, durch die eine Längsachse ragt, umfassend einen Dämpfer mit stirnseitig angeordnetem Anschlagsdeckelelement, eine Fußpunktverstelleinrichtung, ein Gegenlager, welches der Fußpunktverstelleinrichtung entlang der Längsachse gegenüberliegt, eine Feder, die sich einends an der Fußpunktverstelleinrichtung und anderenends am Gegenlager abstützt, eine Zusatzfeder, die zwischen der Fußpunktverstelleinrichtung und dem Gegenlager angeordnet ist und dem Anschlagsdeckelelement entlang der Längsachse gegenüberliegt, wobei das Anschlagsdeckelelement mit der Fußpunktverstelleinrichtung verbunden, verbindbar, gekoppelt oder koppelbar ist.

Es ist erkannt worden, dass eine Loslösung des Anschlagsdeckelelements vom Dämpfer und die Zuordnung des Anschlagsdeckelelements zur Fußpunktverstelleinrichtung die oben genannten Probleme überwindet. Das Anschlagsdeckelelement ist durch die Fußpunktverstelleinrichtung verstellbar. Das Anschlagsdeckelelement kann mit der Fußpunktverstelleinrichtung verstellbar verbunden, verbindbar, gekoppelt oder koppelbar sein. Die Verbindung oder Verbindbarkeit zwischen Anschlagsdeckelelement und Fußpunktverstelleinrichtung kann unmittelbar erfolgen. Die Kopplung oder Koppelbarkeit zwischen Anschlagsdeckelelement und Fußpunktverstelleinrichtung kann mittelbar erfolgen. Eine Verstellung der Fußpunktverstelleinrichtung kann das Anschlagsdeckelelement und die Zusatzfeder relativ aufeinander zu bewegen, um den Zusatzfederweg einzustellen und zugleich den Federweg der Feder zu einzustellen. Die Zusatzfeder kann beispielsweise eine elastomere Zusatzfeder sein, vorzugsweise aus einem mikrozellulärem Polyurethan oder einem kompakten Elastomer sein.

Dadurch, dass das Anschlagsdeckelelement mit der Fußpunktverstelleinrichtung verbunden, verbindbar, gekoppelt oder koppelbar ist, können zwei unterschiedliche Aspekte in Abhängigkeit gebracht werden, nämlich einerseits der Abstand von Zusatzfeder zu Anschlagsdeckelelement (Zusatzfederweg) und andererseits eine Federvorbelastung. Das Anschlagsdeckelelement kann vermittels der Fußpunktverstelleinrichtung in eine Position verstellt werden, die mit der Federvorbelastung korrespondiert. Das Anschlagsdeckelelement ist gegenüber dem Dämpfer beweglich oder nicht dämpferfest.

Dadurch kann der maximale Federweg der Feder eingeschränkt werden, um große Stauchungen und deren vorzeitigen Ausfall zu verhindern. Zudem kann nunmehr eine Anpassung des Steifigkeitsverlaufs fahrzeugniveau- und beladungsabhängig erfolgen. Ferner führt die Fußpunktverstellung nicht zu einer gesteigerten Belastung der Feder. Das Anschlagsdeckelelement kann nun unabhängig vom Beladungszustand des Fahrzeugs verstellt werden. Zudem erleiden die Fahrzeuginsassen durch die Beladung und den daran anpassbaren Federsteifigkeitsverlauf keinen Komfortverlust mehr, denn das Fahrzeug schwingt weniger und behält die Angebundenheit zum Untergrund.

Gemäß einer denkbaren Ausgestaltung der Schwingungsdämpfereinheit kann die Zusatzfeder fest mit dem Gegenlager verbunden sein. Dadurch wird die Zusatzfeder auch bei nahendem oder daran anschlagendem oder komprimierendem Anschlagsdeckelelement sicher fixiert.

Gemäß einer denkbaren Ausgestaltung der Schwingungsdämpfereinheit bildet das Anschlagsdeckelelement einen Anschlag für die Zusatzfeder aus.

Gemäß einer denkbaren Ausgestaltung der Schwingungsdämpfereinheit kann das Anschlagsdeckelelement stirnseitig eines Dämpfergehäuses des Dämpfers angeordnet sein. Somit kann das Anschlagsdeckelelement der Zusatzfeder gegenüberliegend verortet werden.

Gemäß einer denkbaren Ausgestaltung der Schwingungsdämpfereinheit kann ein Verstellweg (beispielsweise bezüglich Richtung und Länge) der Fußpunktverstelleinrichtung identisch mit einem Verstellweg des Anschlagsdeckelelements sein. Dadurch kann bei einer Verstellung des Fußpunktes um eine Strecke auch das Anschlagsdeckelelement um eine identische Strecke in Richtung der Zusatzfeder verstellt werden. Hierdurch kann das Niveau des Fahrzeugs mittels der Fußpunktverstellung angehoben werden und der maximale Federweg zugleich geeignet begrenzt werden.

Gemäß einer denkbaren Ausgestaltung der Schwingungsdämpfereinheit kann ein Verstellweg (beispielsweise bezüglich Richtung und Länge) der Fußpunktverstelleinrichtung größer als ein Verstellweg des Anschlagsdeckelelements sein. Dadurch kann bei einer Verstellung des Fußpunktes um eine Strecke auch das Anschlagsdeckelelement um eine Teilstrecke davon in Richtung der Zusatzfeder verstellt werden. In diesem Fall könnte die Fußpunktverstelleinrichtung beispielsweise zunächst einen eigenen Teilverstellweg zurücklegen, während sie in Richtung des Anschlagsdeckelelements verstellt wird. Danach könnte sie mit dem Anschlagsdeckelelement verbunden oder gekoppelt werden und einen weiteren Teilverstellweg gemeinsam mit dem Anschlagsdeckelelement zurücklegen. Hierdurch kann das Niveau des Fahrzeugs mittels der Fußpunktverstellung angehoben werden und der maximale Federweg zugleich geeignet begrenzt werden.

Gemäß einer Ausgestaltung der Schwingungsdämpfereinheit kann sie ein Verbindungselement umfassen, welches die Fußpunktverstelleinrichtung mit dem Anschlagsdeckelelement verbindet, verbinden kann, koppelt oder koppeln kann. Mittels des Verbindungselements kann der unterschiedlichen Verortung von Fußpunktverstelleinrichtung und Anschlagsdeckelelement Rechnung getragen werden. Die Fußpunktverstelleinrichtung kann nämlich einends der Schwingungsdämpfereinheit angeordnet sein. Dort kann sich die Feder abstützen. Das Anschlagsdeckelelement hingegen kann zentral in der Schwingungsdämpfereinheit angeordnet sein. Dort kann es mit der Zusatzfeder interagieren. Das Verbindungselement dient der Stellwegübertragung von der Fußpunktverstelleinrichtung zum Anschlagsdeckelelement. So können beide Elemente an ihren üblichen Verortungen verbleiben, ungeachtet der Möglichkeit zum Verbinden oder Koppeln.

Gemäß einer denkbaren Ausgestaltung der Schwingungsdämpfereinheit kann das Verbindungselement vom Dämpfergehäuse des Dämpfers axial und/oder radial geführt werden. Dies vermeidet eine Geräuschbildung, beispielsweise ein Klappern. Somit kann auf weitere Führungsbauteile verzichtet werden. Zwischen dem Verbindungselement und dem Dämpfer oder Dämpfergehäuse kann ein Puffer angeordnet sein, beispielsweise ein MCU-Puffer oder ein Gummipuffer. Dies vermeidet eine Geräuschbildung, beispielsweise ein Klappern.

Gemäß einer denkbaren Ausgestaltung der Schwingungsdämpfereinheit kann das Verbindungselement ein Hohlzylinder oder ein Hohlzylinderabschnitt von Fußpunktverstelleinrichtung und/oder Anschlagsdeckelelement sein. Dadurch kann das Dämpfergehäuse in einfacher Weise und bauraumsparend vom Verbindungselement umgriffen werden.

Gemäß einer Ausgestaltung der Schwingungsdämpfereinheit kann das Verbindungselement von der Fußpunktverstelleinrichtung ausgebildet oder damit fest verbunden sein, welches sich in Richtung des Anschlagsdeckelelements erstreckt. Alternativ kann das Verbindungselement von dem Anschlagsdeckelelement ausgebildet oder damit fest verbunden sein, welches sich vom Anschlagsdeckelelement zur Fußpunktverstelleinrichtung erstreckt. Dadurch kann eine Bauteilanzahl reduziert werden. Denkbar ist, dass das Verbindungselement bei Ausbildung durch oder Verbindung mit der Fußpunktverstelleinrichtung oder dem Anschlagsdeckelelement gegen das andere von Fußpunktverstelleinrichtung oder Anschlagsdeckelelement lose anliegen kann. Dadurch kann das eine Bauteil einen längeren Verstellweg zurücklegen als das andere Bauteil.

Gemäß einer denkbaren Ausgestaltung der Schwingungsdämpfereinheit kann das Verbindungselement, das Anschlagsdeckelelement und zumindest ein Teil der Fußpunktverstelleinrichtung einstückig ausgebildet sein. Der Teil der Fußpunktverstelleinrichtung kann das erste oder zweite Wandelement sein. Dadurch kann eine Bauteilanzahl weiter reduziert und ein Anschlag gegen Ausfedern geschaffen werden. Die Ausfederungsverhinderung kann dabei sowohl innerhalb der Fußpunktverstelleinrichtung wie auch stirnseitig am Dämpfer und Anschlagsdeckelelement wirken.

Gemäß einer denkbaren Ausgestaltung der Schwingungsdämpfereinheit kann die Fußpunktverstelleinrichtung und/oder das Verbindungselement und/oder das Anschlagsdeckelelement derart ausgestaltet sein, dass in der eingefahrenen Stellung der Fußpunktverstelleinrichtung das Anschlagsdeckelelement axialdistanziert zur Stirnseite des Dämpfers ist. Das Anschlagsdeckelelement liegt daher in der eingefahrenen Stellung der Fußpunktverstelleinrichtung nicht auf der Stirnseite des Dämpfers auf. Dies verhindert einen direkten Krafteintrag über das Anschlagsdeckelelement in die Stirnseite des Dämpfers hinein, wodurch Beschädigung vermieden werden können.

Denkbar ist, dass ein gegenseitiges Anliegen der Wegbegrenzer der Fußpunktverstelleinrichtung aneinander die Axialdistanz zwischen Anschlagsdeckelelement und Stirnseite des Dämpfers über das Verbindungselement definieren. Dadurch ist eine Druckkraft, die in das Anschlagsdeckelelement eingetragen wird unter Aussparung der Stirnseite des Dämpfers via des Verbindungselements in die Wegbegrenzer der Fußpunktverstelleinrichtung eintragbar. Hierdurch kann eine Beschädigung des Anschlagsdeckelelements und/oder des Verbindungselements vermieden werden.

Gemäß einer denkbaren Ausgestaltung der Schwingungsdämpfereinheit kann das Verbindungselement das einzige Bauteil sein, welches die Fußpunktverstelleinrichtung mit dem Anschlagsdeckelelement verbindet, weshalb weitere Bauteile hierzu verzichtbar sind. Eine Wirckette kann über das Verbindungselement führen. Somit kann das Verbindungselement entweder der Fußpunktverstelleinrichtung oder dem Anschlagsdeckelelement zugeordnet sein oder aber auch mehrteilig, beispielsweise zweiteilig ausgeführt sein, wobei dann ein Teil der Fußpunktverstelleinrichtung und ein weiterer Teil dem Anschlagsdeckelelement zugeordnet sein kann oder damit fest verbunden oder einstückig ausgebildet sein kann. Im letzteren Fall können sich die Teile aufeinander zu erstrecken und miteinander verbunden werden, verbindbar sein, gekoppelt werden oder koppelbar sein, insbesondere lose aneinander anliegen.

Gemäß einer denkbaren Ausgestaltung der Schwingungsdämpfereinheit kann das Verbindungselement einstückig oder fest mit der Fußpunktverstelleinrichtung und/oder dem Anschlagsdeckelelement ausgebildet sein. Sofern es einstückig oder fest mit nur einem von Fußpunktverstelleinrichtung und Anschlagsdeckelelement verbunden ist, kann es sich gegen das jeweils andere Bauteil lose abstützen. Eine zeitweise Stellbewegung kann somit auf das andere Bauteil übertragen werden, eine dauerhafte Zwangskopplung kann jedoch vermieden werden. Sofern das Verbindungselement einstückig oder fest mit Fußpunktverstelleinrichtung und Anschlagsdeckelelement ausgebildet ist, kann es sich dazwischen erstrecken und eine dauerhafte Verbindung der beiden Bauteile realisieren.

Gemäß einer Ausgestaltung der Schwingungsdämpfereinheit kann das Anschlagsdeckelelement lose auf dem Verbindungselement und/oder dem Dämpfer aufliegen. Das Anschlagsdeckelelement ist somit nicht fest mit dem Verbindungselement und/oder dem Dämpfer verbunden. Ein Verstellweg (beispielsweise bezüglich Richtung und Länge) der Fußpunktverstelleinrichtung kann daher teilweise (mit) dem Verstellweg des Anschlagsdeckelelements korrespondieren. Dadurch kann bei einer Verstellung des Fußpunktes um eine Strecke in Richtung Zusatzfeder auch das Anschlagsdeckelelement um eine zumindest teilweise korrespondierende Strecke in Richtung der Zusatzfeder verstellt werden. Hierdurch kann das Niveau des Fahrzeugs mittels der Fußpunktverstellung angehoben werden und der maximale Federweg zugleich geeignet begrenzt werden. Es ist beispielsweise denkbar, dass das Anschlagsdeckelelement stirnseitig lose auf dem Dämpfer oder Dämpfergehäuse aufliegt. Bei einer Verstellung des Fußpunktes in Richtung Zusatzfeder kann das Anschlagsdeckelelement im Laufe der Verstellbewegung vom Verbindungselement mitgenommen werden, sich vom Dämpfer oder Dämpfergehäuse lösen und sich der Zusatzfeder annähern. Wird der Fußpunkt nun von der Zusatzfeder distanziert, kann sich das Anschlagsdeckelelement wieder stirnseitig auf dem Dämpfer oder Dämpfergehäuse ablegen.

Gemäß einer Ausgestaltung der Schwingungsdämpfereinheit kann das Anschlagsdeckelelement vom Verbindungselement in Axialrichtung gestützt sein und/oder vom Verbindungselement in Radialrichtung gestützt sein und/oder vom Dämpfer in Radialrichtung gestützt sein. Das Stützen kann eine Gleitlagerung sein. Auf ein zusätzliches Bauteil zur axialen Lagerung und/oder radialen Stützung kann daher zugunsten eines reduzierten Bauraumbedarfs und einer Bauteilanzahlreduzierung verzichtet werden. Denkbar ist, dass ein Lagerring oder Axialrippen für die axiale Stützung und/oder radiale Stützung vorgesehen ist/sind. Der Lagerring und/oder die Axialrippen kann/können vom Anschlagsdeckelelement und/oder vom Verbindungselement und/oder vom Dämpfer ausgebildet oder daran angeordnet sein. Der Lagerring bietet einen umfangsseitig ununterbrochene Lagerung/Stützung aus. Hingegen sind Axialrippen hinterschneidungsfrei ausbildbar und eignet sich, um von einem Medium zwischen den Axialrippen hindurch zum Druckausgleich durchströmt zu werden. Der Lagerring und/oder die Axialrippen kann/können ein Verkippen und Verklemmen des Anschlagsdeckelelements verhindern.

Gemäß einer Ausgestaltung der Schwingungsdämpfereinheit kann im unbelasteten Zustand der Schwingungsdämpfereinheit und/oder eingefahrener Stellung der Fußpunktverstelleinrichtung ein Freiweg zwischen dem Anschlagsdeckelelement und der Fußpunktverstelleinrichtung oder dem Verbindungselement ausgebildet sein. Der Freiweg kann in einer eingefahrenen Stellung der Fußpunktverstelleinrichtung vorliegen. Das Anschlagsdeckelelement kann daher axial beabstandet zur Fußpunktverstelleinrichtung bzw. einer Anschlagsdeckelelementkontaktfläche der Fußpunktverstelleinrichtung oder dem Verbindungselement bzw. einer Anschlagsdeckelelementkontaktfläche des Verbindungselements sein. Das Anschlagsdeckelelement kann demgemäß erst nach Zurücklegen einer freiwegentsprechenden Strecke durch das Verbindungselement oder die Fußpunktverstelleinrichtung mitgenommen und in Richtung Zusatzfeder verstellt werden. Die Verstellwege von Anschlagsdeckelelement einerseits und Fußpunktverstelleinrichtung andererseits können somit verschieden sein. Dadurch können die Geometrien von Dämpfer und Fußpunktverstelleinrichtung unabhängig voneinander gewählt werden. Über die Länge des Freiwegs lässt sich zudem der Abstand von Zusatzfeder zu Anschlagsdeckelelement einstellen. Der "unbelasteten Zustand" soll in Einbaulage der Schwingungsdämpfereinheit in einem Kraftfahrzeug ohne äußere Belastung (beispielsweise eine Beladung) vorliegen.

Gemäß einer denkbaren Ausgestaltung der Schwingungsdämpfereinheit kann sich die Fußpunktverstelleinrichtung am Dämpfer oder Dämpfergehäuse abstützen. Sie kann mit dem Dämpfer oder Dämpfergehäuse fest verbunden sein. Dadurch kann sie einen Fußpunkt in Richtung Gegenlager verstellen.

Gemäß einer denkbaren Ausgestaltung der Schwingungsdämpfereinheit kann die Fußpunktverstelleinrichtung Wegbegrenzer aufweisen, welche in eingefahrener Stellung der Fußpunktverstelleinrichtung die beiden Wandelemente aneinander abstützten. Denkbar ist, dass ein Wegbegrenzer eines Wandelements als Zylinder oder Hohlzylinder und der Wegbegrenzer des anderen Wandelements als Ringstufe ausgebildet ist. In der eingefahrenen Stellung können sich Zylinder / Hohlzylinder und Ringstufe aneinander abstützen.

Gemäß einer denkbaren Ausgestaltung der Schwingungsdämpfereinheit kann das Anschlagsdeckelelement aufgrund einer Schwerkraftbeaufschlagung in eine lose Anlage an den Dämpfer, das Dämpfergehäuse und/oder das Verbindungselement gelangen.

Gemäß einer denkbaren Ausgestaltung der Schwingungsdämpfereinheit kann das Anschlagsdeckelelement ein separates Bauteil zum Dämpfer, zum Dämpfergehäuse, zum Verbindungselement und/oder zur Fußpunktverstelleinrichtung sein. Dies ermöglicht die modulare Verwendung von Anschlagsdeckelelementen.

Gemäß einer denkbaren Ausgestaltung der Schwingungsdämpfereinheit kann die Feder eine Schraubenfeder sein. Dies dient einer optimalen Funktionalität der Schwingungsdämpfereinheit zu geringen Kosten.

Gemäß einer denkbaren Ausgestaltung der Schwingungsdämpfereinheit kann das Anschlagsdeckelelement einen Scheibenabschnitt und einen zylindrischen Mantelabschnitt umfassen. Mittels Scheibenabschnitt kann sie anliegen oder kontaktiert werden und der Mantelabschnitt kann der Führung und dem Verkippschutz dienen.

Gemäß einer denkbaren Ausgestaltung der Schwingungsdämpfereinheit kann das Anschlagsdeckelelement eine Bohrung aufweisen, beispielsweise im Scheibenabschnitt. Durch die Bohrung kann die Dämpferstange des Dämpfers ragen.

Gemäß einer denkbaren Ausgestaltung der Schwingungsdämpfereinheit kann die Fußpunktverstelleinrichtung ein erstes Wandelement und ein zweites axial dazu beabstandetes Wandelement umfassen, wobei zwischen den Wandelementen eine zumindest abschnittsweise von einer Elastomermembran begrenzte Kammer ausgebildet ist. Das erstes Wandelement ist festlegbar, beispielsweise an einer festen Struktur oder einem Dämpfer oder Dämpfergehäuse. Das zweite Wandelement kann gegenüber dem ersten Wandelement axial beweglich sein. Die Kammer kann wahlweise mittels Fluiddruck oder Gasdruck beaufschlagbar sein, um die beiden Wandelemente voneinander zu distanzieren. Ein Reduzieren des Fluiddrucks oder Gasdrucks führt zu einer Annäherung der Wandelemente bis hin zu einer eingefahrenen Stellung. Das zweiten Wandelement kann die Feder abstützen. Das zweiten Wandelement kann das Verbindungselement ausbilden oder damit fest verbunden sein.

Erfindungsgemäß wird zudem eine Schwingungsdämpfereinheit vorgeschlagen, durch die eine Längsachse ragt, umfassend einen Dämpfer mit stirnseitig angeordnetem Anschlagsdeckelelement, eine Fußpunktverstelleinrichtung, ein Gegenlager, welches der Fußpunktverstelleinrichtung entlang der Längsachse gegenüberliegt, eine Feder, die sich einends an der Fußpunktverstelleinrichtung und anderenends am Gegenlager abstützt, einer Zusatzfeder, die zwischen der Fußpunktverstelleinrichtung und dem Gegenlager angeordnet ist und dem Anschlagsdeckelelement entlang der Längsachse gegenüberliegt, wobei die Zusatzfeder mit der Fußpunktverstelleinrichtung verbunden, verbindbar, gekoppelt oder koppelbar ist.

Diese Schwingungsdämpfereinheit unterscheidet sich von der eingangs genannten Schwingungsdämpfereinheit dadurch, dass nunmehr die Zusatzfeder anstelle des Anschlagsdeckelelements mit der Fußpunktverstelleinrichtung verbunden, verbindbar, gekoppelt oder koppelbar ist.

Dadurch, dass die Zusatzfeder mit der Fußpunktverstelleinrichtung verbunden, verbindbar, gekoppelt oder koppelbar ist, können auch hier die zwei unterschiedlichen Aspekte in Abhängigkeit gebracht werden, nämlich einerseits der Abstand von Zusatzfeder zu Anschlagsdeckelelement und andererseits eine Federvorbelastung. Die Zusatzfeder kann vermittels der Fußpunktverstelleinrichtung in eine Position verstellt werden, die mit der Federvorbelastung korrespondiert. Die Zusatzfeder ist gegenüber dem Dämpfer beweglich oder nicht dämpferfest und auch nicht gegenlagerfest. Dazu ist die Zusatzfeder auf dem ersten oder zweiten Wandelement verbunden, verbindbar, gekoppelt oder koppelbar bzw. mit diesem gekoppelt.

Dadurch kann der maximale Federweg der Feder eingeschränkt werden, um deren Ausfall zu verhindern. Zudem kann nunmehr eine Steifigkeitsanpassungen fahrzeugniveau- und beladungsabhängig erfolgen. Ferner führt die Fußpunktverstellung nicht zu einer gesteigerten Belastung der Feder. Die Zusatzfeder und der Zusatzfederweg können nun unabhängig vom Beladungszustand des Fahrzeugs verstellt bzw. eingestellt werden.

Die oben bezüglich der Schwingungsdämpfereinheit beschriebenen Ausgestaltungen sollen auch bezüglich der hier beschriebenen Schwingungsdämpfereinheit als offenbart gelten, sofern technisch nicht ausgeschlossen. In diesem Kontext sollen Zusatzfeder und Anschlagsdeckelelement als miteinander vertauschbar offenbart sein.

Gemäß einer denkbaren Ausgestaltung der Schwingungsdämpfereinheit kann das Anschlagsdeckelelement mit dem Dämpfer oder dem Dämpfergehäuse fest verbunden oder davon ausgebildet sein.

Gemäß einer denkbaren Ausgestaltung der Schwingungsdämpfereinheit kann die Zusatzfeder fest mit der Fußpunktverstelleinrichtung, vorzugsweise mit dem ersten oder zweiten Wandelement, verbunden sein.

Gemäß einer denkbaren Ausgestaltung der Schwingungsdämpfereinheit kann sich der Dämpfer oder das Dämpfergehäuse am Gegenlager abstützen. Das Gegenlager kann mit dem Dämpfer oder Dämpfergehäuse fest verbunden sein. Dadurch kann die Fußpunktverstelleinrichtung einen Fußpunkt in Richtung Gegenlager verstellen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine bekannte Schwingungsdämpfereinheit in unbelastetem Zustand;
- Fig. 1b: die Schwingungsdämpfereinheit der Fig. 1a in belastetem Zustand mit verstelltem Fußpunkt;
- Fig. 2a: eine Schwingungsdämpfereinheit in unbelastetem Zustand;
- Fig. 2b: die Schwingungsdämpfereinheit der Fig. 2a in belastetem Zustand mit verstelltem Fußpunkt;
- Fig. 3a: eine weitere Schwingungsdämpfereinheit in unbelastetem Zustand;
- Fig. 3b: die Schwingungsdämpfereinheit der Fig. 3a in belastetem Zustand mit verstelltem Fußpunkt;
- Fig. 4: eine weitere Schwingungsdämpfereinheit in belastetem Zustand mit verstelltem Fußpunkt;
- Fig. 5: eine weitere Schwingungsdämpfereinheit in unbelastetem Zustand; und
- Fig. 6: eine weitere Schwingungsdämpfereinheit in unbelastetem Zustand.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

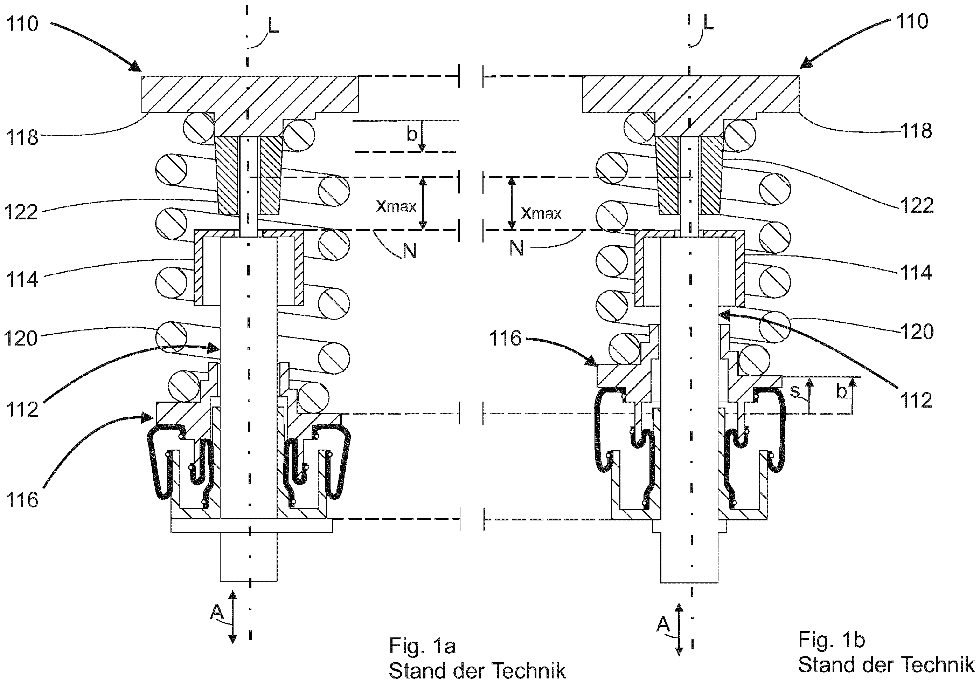

Die Figuren **1a** und **1b** zeigen eine bekannte Schwingungsdämpfereinheit 110 in Einbaulage in einem Kraftfahrzeug in zwei Zuständen. Die Schwingungsdämpfereinheit 110 dient der Dämpfung und dem Abfedern von Stößen eines Kraftfahrzeugs und der Niveauregulierung. Durch die Schwingungsdämpfereinheit 110 ragt eine Längsachse L, wobei in diese Richtung die Dämpfungswirkung erfolgt. Die Schwingungsdämpfereinheit 110 umfasst einen Dämpfer 112, beispielsweise einen Hydraulikdämpfer. Stirnseitig ist am Dämpfer 112 ein Anschlagsdeckelelement 114 befestigt. Das Anschlagsdeckelelement 114 ist fest am Dämpfer 112 angeordnet, beispielsweise fest mit einem Dämpfergehäuse verbunden. Die Dämpferstange steht an gleicher Stirnseite aus dem Dämpfergehäuse heraus und ist mit einem Gegenlager 118 verbunden.

Die Schwingungsdämpfereinheit 110 weist zur Niveauregulierung des Kraftfahrzeugs eine Fußpunktverstelleinrichtung 116 auf. Die Fußpunktverstelleinrichtung 116 umfasst eine erste Wandung und eine zweite Wandung, die entlang der Längsachse L zueinander beabstandet sind und mit zumindest einer Membran ein veränderbares Volumen, insbesondere ein Fluidvolumen, einschließen. Die Schwingungsdämpfereinheit 110 umfasst zudem das Gegenlager 118, welches der Fußpunktverstelleinrichtung 116 entlang der Längsachse L gegenüberliegt.

Sie umfasst fernen eine Feder 120, hier als Schraubendruckfeder dargestellt, die sich einends an der Fußpunktverstelleinrichtung 116 und anderenends am Gegenlager 118 abstützt. Eine Kraftbeaufschlagung der Fußpunktverstelleinrichtung 116 in Richtung des Gegenlagers 118 oder des Gegenlagers 118 in Richtung der Fußpunktverstelleinrichtung 116 führt zur Komprimierung der Feder 120. Um zu verhindern, dass die Feder 120 überlastet sowie im extremsten Fall vollständig komprimiert wird (die Feder 120 ist vollständig gestaucht und die Ringe der Feder 120 kommen in Kontakt miteinander), weist die Schwingungsdämpfereinheit 110 eine elastische Zusatzfeder 122 auf. Die Zusatzfeder 122 ist zwischen der Fußpunktverstelleinrichtung 116 und dem Gegenlager 118 angeordnet. Zudem liegt die Zusatzfeder 122 dem Anschlagsdeckelelement 114 entlang der Längsachse L gegenüber. Zur Begrenzung des Einfederwegs kann die Zusatzfeder 122 daher am Anschlagsdeckelelement 114 anschlagen.

Bei einer dynamischen Belastung, etwa im Fahrbetrieb, federt diese Schwingungsdämpfereinheit 110 dynamisch um einen Nullpunkt N herum. Der maximale Einfederweg Xₘₐₓ wird dabei durch die Progression der Zusatzfeder 122 beschränkt.

Wird das Kraftfahrzeug in diesem Zustand (Fig. 1a) beladen, so würde die Feder 120 um einen beladungsabhängigen Weg b nachgeben. Zur Veranschaulichung in Fig. 1a angetragen. Dadurch bewegt sich auch die Zusatzfeder 122 um den Weg b auf das Anschlagsdeckelelement 114 zu. Das Kraftfahrzeug ist somit aufgrund der beladungsabhängigen Stauchung der Feder 120 abgesenkt. Dem soll nun die Niveauregulierung in Form der Fußpunktverstelleinrichtung 116 entgegenwirken. Um das ursprüngliche Niveau des Kraftfahrzeugs vor Beladung zu erreichen, wird in das Volumen der Fußpunktverstelleinrichtung 116 zusätzliches Fluid gepumpt und somit das Volumen vergrößert, wodurch eine Wandung der Fußpunktverstelleinrichtung 116 und auch der Fußpunkt der Feder 120 verschoben wird; so gezeigt in Fig. 1b. Die vorbelastete Feder 122 wird entlang der Längsachse L verstellt und drückt das Gegenlager 118 und somit auch das Kraftfahrzeug auf das ursprüngliche Niveau.

Zu sehen ist, dass der fußpunktverstelleinrichtungsseitige Fußpunkt der Feder 120 in Richtung des Gegenlagers 118 verschoben ist, beispielsweise genau um den Weg b zurück. Jedoch wird dadurch auch der ursprüngliche Abstand zwischen Zusatzfeder 122 und dem Anschlagsdeckelelement 114 vor Beladung des Kraftfahrzeugs wieder hergestellt. Dieser Nebeneffekt ist mit erheblichen Nachteilen verbunden.

Bei der gleichen dynamischen Belastung (vergleichen mit der Schwingungsdämpfereinheit 110 im ursprünglichen und unbelasteten Zustand gemäß Fig. 1a), federt die Schwingungsdämpfereinheit 110 auch in diesem Zustand gemäß Fig. 1b dynamisch um den Nullpunkt N herum. Dies liegt auch daran, dass die Feder 120 kein progressives Verhalten hat. Auch der maximale Einfederweg Xₘₐₓ ist in diesem Zustand gemäß Fig. 1b wieder durch die Progression der Zusatzfeder 122 begrenzt. Allerdings ist die Feder 120 bereits durch die Beladung um den Vorbelastungsweg s eingefedert und vorbelastet. Es wird hier angenommen: s = b. Die Feder 120 ist folglich um den Weg b stärker belastet und kann vorzeitig ausfallen.

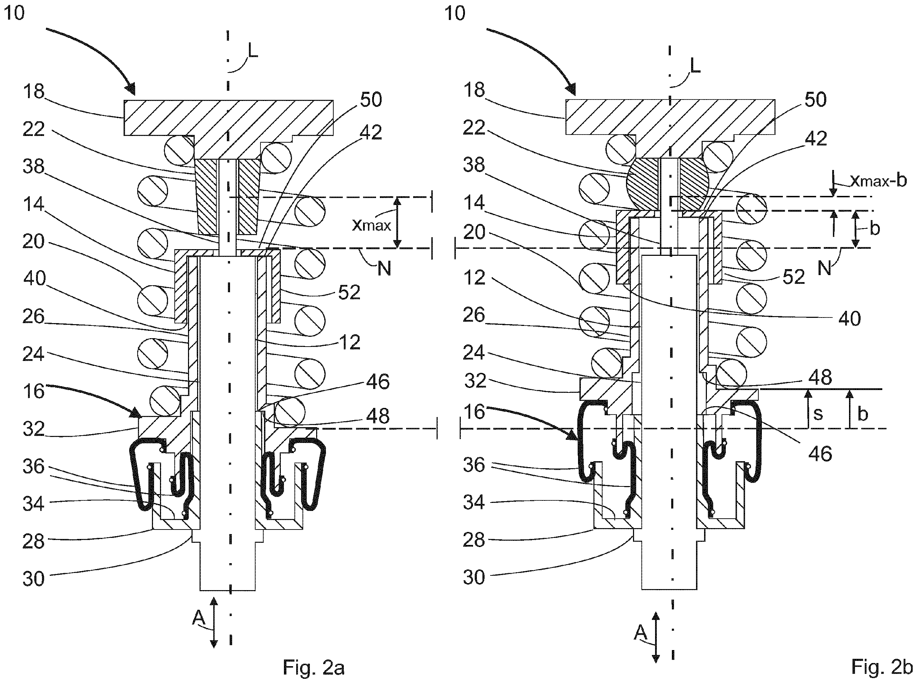

Die Figuren **2a** und **2b** zeigen in einer Längsschnittansicht eine Ausführung der Schwingungsdämpfereinheit 10 in Einbaulage in einem Kraftfahrzeug in zwei Zuständen. Figur 2a zeigt einen unbeladenen Zustand des Fahrzeugs bei eingefahrener Fußpunktverstelleinrichtung 16. Figur 2b hingegen zeigt einen beladenen Zustand des Fahrzeugs bei ausgefahrener Fußpunktverstelleinrichtung 16.

Die Schwingungsdämpfereinheit 10 dient der Dämpfung und dem Abfedern von Stößen eines Kraftfahrzeugs und der Niveauregulierung. Durch die Schwingungsdämpfereinheit 10 ragt eine Längsachse L mit korrespondierender Axialrichtung A, wobei in diese Richtung die Dämpfungswirkung erfolgt. Die Schwingungsdämpfereinheit 10 umfasst einen Dämpfer 12, beispielsweise einen Hydraulikdämpfer, mit einem Dämpfergehäuse 24 und einer Dämpferstange 38. Stirnseitig liegt am Dämpfer 12 ein Anschlagsdeckelelement 14 lose an. Die Dämpferstange 38 steht an gleicher Stirnseite aus dem Dämpfergehäuse 24 heraus und ist mit einem Gegenlager 18 verbunden.

Die Schwingungsdämpfereinheit 10 weist zur Niveauregulierung des Kraftfahrzeugs eine Fußpunktverstelleinrichtung 16 auf. Die Fußpunktverstelleinrichtung 16 umfasst ein erstes Wandelement 28, welches sich auf einem Abstützring 30 des Dämpfers 12 abstützt und mit dem Dämpfergehäuse 24 fest verbunden ist. Die Fußpunktverstelleinrichtung 16 umfasst ein zweites Wandelement 32, welches zum ersten Wandelement 28 axial beabstandet ist. Das zweite Wandelement 32 ist gegenüber dem ersten Wandelement 28 axial beweglich und am Dämpfergehäuse 24 geführt. Zwischen den Wandelementen 28, 32 ist eine Kammer 34 angeordnet, welche in Radialrichtung beidseits von jeweils einer Elastomermembran 36 begrenzt ist. Mittels einstellbarem Gas- und/oder Fluiddruck in der Kammer 34 kann der axiale Abstand der beiden Wandelemente 28, 32 eingestellt werden. In der nächsten Stellung der beiden Wandelemente 28, 32 zueinander weist die Fußpunktverstelleinrichtung 16 eine eingefahrene Stellung auf, gezeigt in Figur 2a. Das erste Wandelement 28 weist einen Wegbegrenzer 46 in Form eines Hohlzylinders auf, der sich entlang der Längsachse L in Richtung des zweiten Wandelements 32 erstreckt. Das zweite Wandelement 32 weist einen Wegbegrenzer 48 in Form einer Ringstufe auf. In der gezeigten eingefahrenen Stellung stützen sich der Hohlzylinder und die Ringstufe aneinander ab.

Die Schwingungsdämpfereinheit 10 umfasst zudem das Gegenlager 18, welches der Fußpunktverstelleinrichtung 16 entlang der Längsachse L gegenüberliegt.

Die Schwingungsdämpfereinheit 10 umfasst fernen eine Feder 20, hier als Schraubendruckfeder dargestellt, die sich einends am zweiten Wandelement 32 der Fußpunktverstelleinrichtung 16 und anderenends am Gegenlager 18 abstützt. Eine Kraftbeaufschlagung der Fußpunktverstelleinrichtung 16 in Richtung des Gegenlagers 18 oder des Gegenlagers 18 in Richtung der Fußpunktverstelleinrichtung 16 führt zur Komprimierung der Feder 20. Um zu verhindern, dass die Feder 20 überlastet oder im extremsten Fall vollständig komprimiert wird (die Feder 20 ist vollständig gestaucht und die Ringe der Feder 20 kommen in Kontakt miteinander), weist die Schwingungsdämpfereinheit 10 eine elastische Zusatzfeder 22 auf. Die Zusatzfeder 22 ist ortsfest mit dem Gegenlager 18 verbunden, bespielsweise mittels eines Klemmsitzes oder eines Formschlusses. Die Zusatzfeder 22 ist zwischen der Fußpunktverstelleinrichtung 16 und dem Gegenlager 18 angeordnet. Zudem liegt die Zusatzfeder 22 dem Anschlagsdeckelelement 14 entlang der Längsachse L gegenüber. Zur Begrenzung des Einfederwegs kann die Zusatzfeder 22 daher am Anschlagsdeckelelement 14 anschlagen und komprimiert werden. Das Anschlagsdeckelelement 14 bildet einen Anschlag für die Zusatzfeder 22 aus. Das Anschlagsdeckelelement 14 weist einen Scheibenabschnitt 50 und einen zylindrischen Mantelabschnitt 52 auf.

Die Schwingungsdämpfereinheit 10 umfasst zudem ein Verbindungselement 26, welches als Hohlzylinderabschnitt der Fußpunktverstelleinrichtung 16 ausgebildet ist. Das Verbindungselement 26 ist einstückig mit dem zweiten Wandelement 32 ausgebildet und erstreckt sich zum Anschlagsdeckelelement 14. Stirnseitig des Verbindungselement 26 liegt in der eingefahrenen Stellung der Fußpunktverstelleinrichtung 16 das Anschlagsdeckelelement 14 lose an. Das Verbindungselement 26 dient daher der Verbindung oder Kopplung der Fußpunktverstelleinrichtung 16 mit dem Anschlagsdeckelelement 14. Das Verbindungselement 26 ist vom Dämpfergehäuse 24 axial und radial geführt. Das Anschlagsdeckelelement 14 ist vom Verbindungselement 26 in Axialrichtung A gleitgelagert und in Radialrichtung gestützt. Hierzu dient ein Lagerring oder dienen Axialrippen 40, die im Radialraum zwischen Anschlagsdeckelelement 14 und Verbindungselement 26 vorgesehen sind. Die Axialrippen 40 sind vom Anschlagsdeckelelement 14 ausgebildet und an dessen Mantelanschnitt 52 angeordnet.

Bei einer dynamischen Belastung, etwa im Fahrbetrieb, federt diese Schwingungsdämpfereinheit 10 dynamisch um einen Nullpunkt N herum. Der maximale Einfederweg Xₘₐₓ wird dabei durch die Progression der Zusatzfeder 22 beschränkt.

Eine Verstellung des zweiten Wandelements 32 um den Weg b durch entsprechende Druckveränderung innerhalb der Kammer 34 verstellt das zweite Wandelement 32 in Axialrichtung A auf die Zusatzfeder 22 zu, wie Figur 2b zeigt. Zugleich wird auch das Verbindungselement 26 und auch das Anschlagsdeckelelement 14 um den identischen Weg b in Richtung Zusatzfeder 22 verstellt - die Zusatzfeder 22 ist gestaucht. Der maximale Federweg Xₘₐₓ wird um den Weg b verkürzt. Außerdem wird dadurch die Feder 22 komprimiert. Nach Beladen des Kraftfahrzeugs wird das ursprüngliche Niveau vor Beladung dadurch wieder hergestellt, dass der Fußpunkt der gestauchten Feder 22 verstellt wird, wie Figur 2b zeigt. Der Verstellweg der Fußpunktverstelleinrichtung 16 ist identisch mit dem Verstellweg des Anschlagsdeckelelements 14, solange das Anschlagsdeckelelement 14 und das Verbindungselement 26 gekoppelt sind. Der verkürzte Zusatzfederweg trägt dem ebenfalls verkürzten Federweg Rechnung.

Bei der gleichen dynamischen Belastung (vergleiche: Schwingungsdämpfereinheit 10 im ursprünglichen und unbelasteten Zustand gemäß Fig. 2a), federt die Schwingungsdämpfereinheit 10 in dem Zustand gemäß Fig. 2b dynamisch um den verschobenen Nullpunkt N+b herum. Dies liegt auch daran, dass die Feder 20 kein progressives Verhalten hat. Auch der maximale Einfederweg Xₘₐₓ ist in diesem Zustand gemäß Fig. 2b wieder durch die Progression der Zusatzfeder 22 begrenzt. Die Feder 20 ist durch die Beladung um den Vorbelastungsweg s eingefedert und vorbelastet. Jedoch ist gleichsam auch der Zusatzfederweg verkürzt und der maximale Einfederweg Xₘₐₓ ist um den Weg b verkürzt. Die Feder 20 ist bei maximaler Einfederung unabhängig der in Fig. 2a und 2b gezeigten Position der Fußpunktverrstellung folglich nicht stärker belastet und fällt nicht mehr vorzeitig aus.

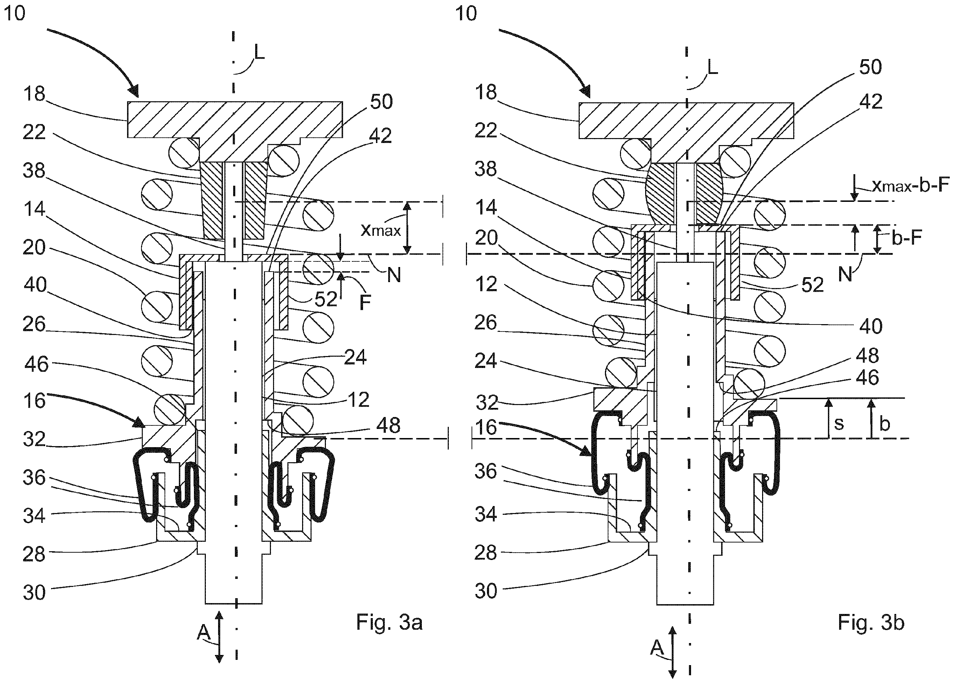

Die Figuren **3a** und **3b** zeigen in einer Längsschnittansicht eine weitere Ausführung der Schwingungsdämpfereinheit 10 in Einbaulage in einem Kraftfahrzeug in zwei Zuständen. Figur 3a zeigt einen unbeladenen Zustand des Fahrzeugs bei nahezu eingefahrener Fußpunktverstelleinrichtung 16. Figur 3b allerdings zeigt einen beladenen Zustand des Fahrzeugs bei ausgefahrener Fußpunktverstelleinrichtung 16. Zur Vermeidung von Wiederholungen sollen nachstehend lediglich die Unterschiede zu den Figuren 2a und 2b beschrieben werden, wobei das Übrige analog gilt.

Das Verbindungselement 26 ist stirnseitig nun etwas kürzer ausgebildet, so dass es in eingefahrener Stellung der Fußpunktverstelleinrichtung 16 nicht mehr bis an das Anschlagsdeckelelement 14 heranreicht. Zwischen dem Anschlagsdeckelelement 14 und einer Anschlagsdeckelelementkontaktfläche 42 der Fußpunktverstelleinrichtung 16 ist ein Freiweg F ausgebildet. Der Verstellweg der Fußpunktverstelleinrichtung 16 (Weg b) ist größer als ein Verstellweg des Anschlagsdeckelelements 14 (Weg b-F).

Das Anschlagsdeckelelement 14 wird demgemäß erst nach Zurücklegen einer freiwegentsprechenden Strecke durch das Verbindungselement 26 mitgenommen und in Richtung Zusatzfeder 22 um den Weg b-F verstellt. Die Anschlagsdeckelelementkontaktfläche 42 liegt dabei am Anschlagsdeckelelement 14 an. Die Verstellwege von Anschlagsdeckelelement 14 einerseits und Fußpunktverstelleinrichtung 16 andererseits sind somit verschieden. Der Zusatzfederweg wird geringer verkürzt als ohne den Freiweg F, es ergibt sich Xₘₐₓ-b-F.

Wird das zweite Wandelement 32 nun wieder zur Zusatzfeder 22 distanziert, setzt das Verbindungselement 26 das Anschlagsdeckelelement 14 stirnseitig auf dem Dämpfergehäuse 24 ab und stellt den Freiweg F wieder her, wobei das Absetzen oder Rückstellen des Anschlagsdeckelelements 14 schwerkraftbedingt erfolgen kann. Die Axialrippen 40 sind als separate Teile innenumfangsseitig am Anschlagsdeckelelement 14.

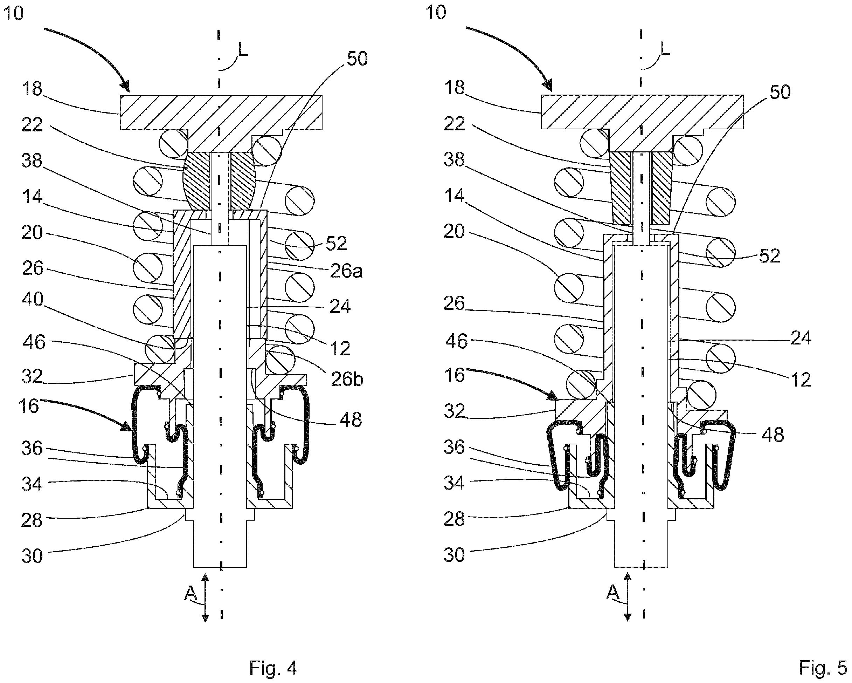

Die Figur **4** zeigt in einer Längsschnittansicht eine weitere Ausführung der Schwingungsdämpfereinheit 10 in Einbaulage in einem Kraftfahrzeug in ausgefahrener Stellung der Fußpunktverstelleinrichtung 16. Zur Vermeidung von Wiederholungen sollen nachstehend lediglich die Unterschiede zu den Figuren 2a und 2b beschrieben werden, wobei das Übrige analog gilt.

Das Verbindungselement 26 ist nunmehr zweiteilig ausgebildet, wobei ein Teil 26a einstückig mit dem Anschlagsdeckelelement 14 und ein weiterer Teil 26b einstückig mit der Fußpunktverstelleinrichtung 16 oder dem zweiten Wandelement 32 ausgebildet ist. Beide Teile 26a, 26b sind Hohlzylinderabschnitte ihres jeweiligen Bauteils. Die beiden Teile 26a, 26b erstrecken sich aufeinander zu und liegen lose aneinander an. Lediglich exemplarisch sind hier keine Axialrippen 40 gezeigt.

Die Figur **5** zeigt in einer Längsschnittansicht eine Schwingungsdämpfereinheit 10 in Einbaulage in einem Kraftfahrzeug in eingefahrener Stellung der Fußpunktverstelleinrichtung 16. Zur Vermeidung von Wiederholungen sollen nachstehend lediglich die Unterschiede zu Figur 4 beschrieben werden, wobei das Übrige analog gilt.

Das Anschlagsdeckelelement 14, das Verbindungselement 26 und das zweite Wandelement 32 sind einstückig ausgebildet. Die beiden Wegbegrenzer 46, 48 liegen aneinander an und das Anschlagsdeckelelement 14 ist axialdistanziert zur Stirnseite des Dämpfers 12.

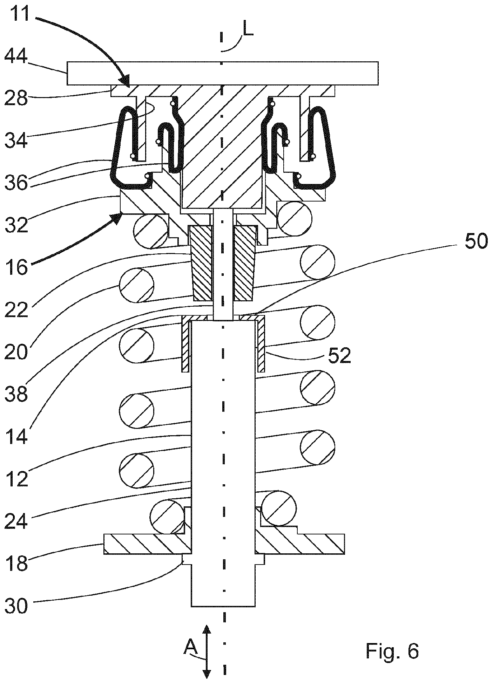

Die Figur **6** zeigt in einer Längsschnittansicht eine Schwingungsdämpfereinheit 11 in Einbaulage in einem Kraftfahrzeug in eingefahrener Stellung der Fußpunktverstelleinrichtung 16. Zur Vermeidung von Wiederholungen sollen nachstehend lediglich die Unterschiede zu den Figuren 2a und 2b beschrieben werden, wobei das Übrige analog gilt.

Die Schwingungsdämpfereinheit 11 gleicht vom Funktionsprinzip der bisher beschriebenen Schwingungsdämpfereinheit 10, denn der Abstand von Anschlagsdeckelelement 14 zu Zusatzfeder 22 ist mittels der Fußpunktverstelleinrichtung 16 einstellbar. Nun ist jedoch die Zusatzfeder 22 anstelle des Anschlagsdeckelelements 14 mit der Fußpunktverstelleinrichtung 16 verbunden, verbindbar, gekoppelt oder koppelbar.

Das Anschlagsdeckelelement 14 ist fest mit dem Dämpfergehäuse 24 verbunden. Ein Verbindungselement 26 ist nicht vorgesehen, denn die Fußpunktverstelleinrichtung 16 liegt der Stirnseite des Dämpfergehäuses 24 gegenüber und die Zusatzfeder 22 ist unmittelbar und fest mit dem zweiten Wandelement 32 verbunden. Das Dämpfergehäuse 24 stützt über seinen Abstützring 30 nun das Gegenlager 18 ab. Die Fußpunktverstelleinrichtung 16 ist an einer festen Struktur 44 festgelegt.

Ein Verstellen des zweiten Wandelements 32 verstellt die Zusatzfeder 22 in Richtung Anschlagsdeckelelement 14 und verkürzt dadurch den Zusatzfederweg und auch den maximalen Federweg. Zugleich wird die Feder 20 komprimiert.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 10: Schwingungsdämpfereinheit
- 11: Schwingungsdämpfereinheit
- 12: Dämpfer
- 14: Anschlagsdeckelelement
- 16: Fußpunktverstelleinrichtung
- 18: Gegenlager
- 20: Feder
- 22: Zusatzfeder
- 24: Dämpfergehäuse
- 26: Verbindungselement
- 26a: Teil
- 26b: Teil
- 28: erstes Wandelement
- 30: Abstützring
- 32: zweites Wandelement
- 34: Kammer
- 36: Elastomermembran
- 38: Dämpferstange
- 40: Axialrippen
- 42: Anschlagsdeckelelementkontaktfläche
- 44: Struktur
- 46: Wegbegrenzer
- 48: Wegbegrenzer
- 50: Scheibenabschnitt
- 52: Mantelabschnitt

- 110: Schwingungsdämpfereinheit
- 112: Dämpfer
- 114: Anschlagsdeckelelement
- 116: Fußpunktverstelleinrichtung
- 118: Gegenlager
- 120: Feder
- 122: Zusatzfeder

- A: Axialrichtung
- b: Weg
- F: Freiweg
- L: Längsachse
- N: Nullpunkt
- s: Vorbelastungsweg
- Xₘₐₓ: maximaler Federweg

## Patentansprüche

1. Schwingungsdämpfereinheit (10), durch die eine Längsachse (L) ragt, umfassend einen Dämpfer (12) mit stirnseitig angeordnetem Anschlagsdeckelelement (14), eine Fußpunktverstelleinrichtung (16), ein Gegenlager (18), welches der Fußpunktverstelleinrichtung (16) entlang der Längsachse (A) gegenüberliegt, eine Feder (20), die sich einends an der Fußpunktverstelleinrichtung (16) und anderenends am Gegenlager (18) abstützt, eine Zusatzfeder (22), die zwischen der Fußpunktverstelleinrichtung (16) und dem Gegenlager (18) angeordnet ist und dem Anschlagsdeckelelement (14) entlang der Längsachse (L) gegenüberliegt, **dadurch gekennzeichnet, dass** das Anschlagsdeckelelement (14) mit der Fußpunktverstelleinrichtung (16) verbunden, verbindbar, gekoppelt oder koppelbar ist.

2. Schwingungsdämpfereinheit (10) nach Anspruch 1, **dadurch gekennzeichnet, dass** sie ein Verbindungselement (26) umfasst, welches die Fußpunktverstelleinrichtung (16) mit dem Anschlagsdeckelelement (14) verbindet, verbinden kann, koppelt oder koppeln kann.

3. Schwingungsdämpfereinheit (10) nach Anspruch 2, **dadurch gekennzeichnet, dass** das Verbindungselement (26) von der Fußpunktverstelleinrichtung (16) ausgebildet oder damit fest verbunden ist, welches sich in Richtung des Anschlagsdeckelelements (14) erstreckt und/oder das Verbindungselement (26) von dem Anschlagsdeckelelemente (14) ausgebildet oder damit fest verbunden ist, welches sich vom Anschlagsdeckelelement (14) zur Fußpunktverstelleinrichtung erstreckt.

4. Schwingungsdämpfereinheit (10) nach Anspruch 2 oder 3, **dadurch gekennzeichnet, dass** das Anschlagsdeckelelement (14) lose auf dem Verbindungselement (26) und/oder dem Dämpfer (12) aufliegt.

5. Schwingungsdämpfereinheit (10) nach einem der Ansprüche 2 bis 4, **dadurch gekennzeichnet, dass** das Anschlagsdeckelelement (14) vom Verbindungselement (26) in Axialrichtung (A) gestützt ist und/oder vom Verbindungselement (26) in Radialrichtung (R) gestützt ist und/oder vom Dämpfer (12) in Radialrichtung (R) gestützt ist.

6. Schwingungsdämpfereinheit (10) nach einem der voranstehenden Ansprüche, **dadurch gekennzeichnet, dass** im unbelasteten Zustand der Schwingungsdämpfereinheit (10) und/oder eingefahrener Stellung der Fußpunktverstelleinrichtung (16) ein Freiweg (F) zwischen dem Anschlagsdeckelelement (14) und der Fußpunktverstelleinrichtung (16) oder dem Verbindungselement (26) ausgebildet ist.

7. Schwingungsdämpfereinheit (11), durch die eine Längsachse (L) ragt, umfassend einen Dämpfer (12) mit stirnseitig angeordnetem Anschlagsdeckelelement (14), eine Fußpunktverstelleinrichtung (16), ein Gegenlager (18), welches der Fußpunktverstelleinrichtung (16) entlang der Längsachse (L) gegenüberliegt, eine Feder (20), die sich einends an der Fußpunktverstelleinrichtung (16) und anderenends am Gegenlager (18) abstützt, einer Zusatzfeder (22), die zwischen der Fußpunktverstelleinrichtung (16) und dem Gegenlager (18) angeordnet ist und dem Anschlagsdeckelelement (14) entlang der Längsachse (L) gegenüberliegt, **dadurch gekennzeichnet, dass** die Zusatzfeder (22) mit der Fußpunktverstelleinrichtung (16) verbunden, verbindbar, gekoppelt oder koppelbar ist.
